# EUROPÄISCHE PATENTSCHRIFT

(11) **EP 1 000 550 B1**
(45) Veröffentlichungstag und Bekanntmachung des Hinweises auf die Patenterteilung: **02.03.2005**
(21) Anmeldenummer: 99120045.2
(22) Anmeldetag: 18.10.1999
(51) Int. Cl.: A23G 3/22, A23G 3/00, A23G 7/00, A23G 9/30

(54) **Verfahren zum Reinigen einer Überziehmaschine sowie reinigbare Überziehmaschine**
Cleaning process for coating machine and cleanable coating machine
Procédé de nettoyage d'une enrobeuse et machine d'enrobage apte à être nettoyée

(30) Priorität: 22.10.1998 DE 19848766; 04.05.1999 DE 19920589
(43) Veröffentlichungstag der Anmeldung: 17.05.2000
(73) Patentinhaber: Sollich KG, 32105 Bad Salzuflen (DE)
(72) Erfinder: Heyde, Hans, 49134 Wallenhorst (DE); Häring, Horst, 38895 Derenburg (DE); Hochapfel, Reiner, 38855 Wernigerode (DE)
(74) Vertreter: Patentanwälte Rehberg + Hüppe

(56) Entgegenhaltungen:
- DE-A- 3 710 539
- DE-C- 454 343
- DE-C- 514 695
- DE-C- 4 243 814
- GB-A- 1 447 190
- GB-A- 2 159 383
- US-A- 4 420 854
- US-A- 5 163 486
- US-A- 5 403 396

## Beschreibung

Die Erfindung bezieht sich auf ein Verfahren zum Reinigen einer Überziehmaschine mit Wasser. Die Überziehmaschine kann mit verschiedenen Aggregaten versehen sein, insbesondere einer Bodenüberziehstation mit Tunkkasten, einer Rüttelvorrichtung unter dem oberen Trum des Gitterbandes und einem Schleierkasten und einem Gebläse über dem oberen Trum des Gitterbandes. Das Verfahren ist zur Verarbeitung von Schokolade und ähnlichen Massen bestimmt. Die Erfindung zeigt auch eine reinigbare Überziehmaschine mit den angegebenen Merkmalen. Eine solche Überziehmaschine dient dazu, insbesondere temperierte Schokolade auf Artikel auf dem Gitterband aufzubringen, wobei die Schokolade im Überschuß durch die Überziehmaschine fließt und dabei auch das Gitterband durchdringt sowie mit einer Vielzahl von Teilen der Überziehmaschine in Berührung kommt. Es handelt sich um eine Überziehmaschine, die eine Überziehstation aufweist, in der die flüssige Schokolade im freien Fall auf die Artikel gelangt. Die Überziehmaschine ist auch mit einer Bodenüberziehstation ausgestattet, und sie weist ein Gebläse zum Abblasen überschüssiger Schokolade auf. Auch andere Massen als Schokolade, beispielsweise fetthaltige Massen, Überzugsmassen, Karamellmassen u. dgl. können mit einer solchen Überziehmaschine verarbeitet werden.

Bei einem Massewechsel in der Überziehmaschine, also wenn beispielsweise eine dunkle Schokolade zuvor verarbeitet worden ist und nachfolgend Artikel mit einer hellen Schokolade oder gar einer weißen Überzugsmasse behandelt werden sollen, entsteht das Problem, die zuvor verarbeitete Masse aus der Überziehmaschine zu entfernen und sämtliche Teile, die mit dieser Masse in Berührung gekommen sind, zu reinigen, damit dann die neue Masse, z. B. die weiße Überzugsmasse, in die Überziehmaschine eingegeben werden kann.

Zur Durchführung eines solchen Massewechsels ist es bekannt, die Überziehmaschine mit der zuvor verarbeiteten Masse aufzuheizen und zu entleeren, wobei die zuvor verarbeitete Masse über eine Rückförderpumpe hinweggeführt wird. Nach dem Abpumpen der zuvor verarbeiteten Masse wird der Innenraum der Überziehmaschine und die dort angeordneten Aggregate, soweit zugänglich, mechanisch gereinigt, d. h. Massereste werden mit Werkzeugen, z. B. einer Spachtel, entfernt. Dieser Vorgang ist sehr zeitaufwendig und je nach Zugänglichkeit des Innenraums auch sehr mühsam. Außerdem ist damit die Überziehmaschine nur grob vorgereinigt, so daß sich ein zweiter Reinigungsschritt anschließen muß. Bei dieser zweiten Reinigung kommt entweder Wasser oder Kakaobutter zum Einsatz.

Es ist bekannt, Überziehmaschinen unter Verwendung von Wasser zu reinigen. Hierzu wird bei stillstehender Überziehmaschine ein handelsüblicher Druckreiniger eingesetzt, durch dessen Lanze oder Düse Wasser auf die Aggregate der Überziehmaschine gespritzt wird. Die an den Aggregaten haftenden Massereste werden durch den Druck des Wassers entfernt. Auch dieser Reinigungsschritt stellt praktisch ein mechanisches Verfahren dar und ist nur insoweit erfolgreich, als die Aggregate zugänglich sind. Das von dem Druckreiniger ausgespritzte Wasser ist zwar heiß, kühlt jedoch nach dem Verlassen der Düse relativ schnell ab und ist insgesamt nicht in der Lage, die Aggregate und Teile der Überziehmaschine nennenswert zu erwärmen. Schlecht zugängliche Stellen an der Überziehmaschine, beispielsweise die Unterseite von Wellen, Leisten o. dgl. werden nur unvollkommen erreicht und dementsprechend nicht hinreichend gereinigt. Durch das Aufspritzen von Wasser mit Druck tritt darüber hinaus eine Verteilung der abzunehmenden Masse auf andere Aggregate der Überziehmaschine und in unzugängliche Stellen hinein ein. Auch erfordert die Verwendung des Wassers einen nachgeschalteten Trocknungsvorgang. Weiterhin ist nachteilig, daß der Wasserverbrauch des Druckreinigers entsprechend hoch ist, da das aufgespritzte Wasser aus der Überziehmaschine abläuft und nicht wieder genutzt wird. Demzufolge muß unterhalb der Überziehmaschine ein Wasserablauf vorhanden sein. Die Verwendung eines Druckreinigers setzt voraus, daß diesem kontinuierlich aufgeheiztes Wasser zugeführt werden muß, so daß ein entsprechend hoher Energiebedarf unvermeidlich ist. Das Waschpersonal, welches diese Reinigung durchführt, muß durch eine entsprechende Kleidung und eine Schutzbrille vor dem Prallwasser geschützt werden. Diese Druckreinigung ist auch insofern nachteilig, als es z. B. die Lebensdauer von Lagern von Wellen und anderen Aggregaten verringert, da das Schmiermittel in den Lagern durch den Druckstrahl zumindest teilweise entfernt wird.

Um diesen Nachteilen der Druckreinigung mit Wasser entgegenzuwirken, ist es bekannt, eine Spülmasse, beispielsweise Kakaobutter oder eine andere Fettlösung, in die Überziehmaschine einzubringen. Die Überziehmaschine wird ohne Durchlauf von Artikeln inganggesetzt, so daß die Spülmasse fortlaufend umgewälzt und beispielsweise über eine Überziehstation umläuft. Dabei erreicht die Spülmasse auch einen großen Teil der mit der vorher verarbeiteten Masse verschmutzten Teile der Überziehmaschine und reinigt diese durch Aufschmelzen mehr oder weniger vollständig. Jedoch werden von der Spülmasse nicht alle Teile der Überziehmaschine erreicht, so daß die Reinigungswirkung nur unvollkommen ist. Die Spülmasse wird am Ende der Reinigung der Überziehmaschine von dieser abgezogen und beispielsweise in der normalen Schokoladeproduktion verarbeitet. Anschließend kann die neue Überzugsmasse eingefüllt werden.

Es ist weiterhin bekannt, die wesentlichen Teile der Überziehmaschine aus Edelstahl auszubilden und an das Entleeren der Überziehmaschine mit der alten Masse eine Naßreinigung mit heißem Wasser unter Druck anzuschließen. Diese Naßreinigung ist in mehrerlei Hinsicht problematisch. Beim Aufbringen eines Sprühstrahles von heißem Wasser auf das Gitterband entsteht eine erhebliche Sprüh- und Verteilungswirkung, so daß die unterhalb des oberen Trums des Gitterbandes angeordneten Aggregate nur sehr unvollkommen erreicht werden. Durch das bei dieser Reinigung notwendigerweise in die Überziehmaschine eingeschleppte heiße Wasser entsteht eine Kontamination, indem günstige Bedingungen für das Wachstum von Bakterien geschaffen werden. Um dieser Gefahr entgegenzuwirken, ist es bekannt, dem Reinigungsvorgang mit heißem Wasser einen Trocknungsvorgang durch das Aufblasen von heißer Luft anzuschließen. Auch dabei werden die Einzelteile der Maschine aufgeheizt, und der Trocknungsvorgang wird über einen entsprechend langen Zeitraum durchgeführt. Dennoch werden von der Trocknung nicht alle Teile erfaßt, und es besteht nicht die Möglichkeit zu kontrollieren, ob wirklich alle Teile, die vorher mit heißem Wasser benetzt wurden, auch trocken sind.

Für einen an einer Überziehmaschine durchzuführenden Massewechsel ist es auch bereits bekannt, das Gitterband quer zu seiner Laufrichtung aufzuschneiden und auf diese Art und Weise die Schleife des Gitterbandes zu öffnen, damit die unterhalb des oberen Trums des Gitterbandes befindlichen Aggregate gut zugänglich gereinigt werden können. Bei dieser Reinigung müssen dann wieder Spülmassen benutzt werden, die z. B. entweder aus Kakaobutter oder wiederum aus Heißwasser bestehen können. Auch dabei ist die Reinigung entsprechend umständlich, aufwendig und unsicher. Insbesondere muß das durchtrennte Gitterband nach der Reinigung wieder zeitraubend zusammengeflochten werden.

Aus der DE 42 43 814 C1 ist eine Überziehmaschine bekannt, bei der eine Reinigung der Maschinenteile mit einer Spülmasse bei einem Massewechsel mit größerer Sicherheit und verbesserter zugänglichkeit der Aggregate unterhalb des oberen Trums der Überziehmaschine durchgeführt werden kann. Zu diesem Zweck weist die Überziehmaschine eine Spanneinrichtung mit einem das Hochheben des Gitterbandes ermöglichenden vergrößerten Spannweg auf. Es sind Mittel zur Halterung des hochgehobenen Gitterbandes, insbesondere am Rahmen der Überziehmaschine angeordnete Auflager zur Aufnahme von Trägern, vorgesehen. Damit ist das Gitterband hochhebbar gestaltet und insbesondere mit Hilfe von Auflagern und Trägern in hochgehobenem Zustand abstützbar, so daß die unterhalb des oberen Trums des Gitterbandes befindlichen Aggregate, also beispielsweise eine Rüttelvorrichtung, eine Bodenüberziehstation, eine Bodenabstreichwelle u. dgl. für die Reinigung mit einer Spülmasse unmittelbar zugänglich sind und die Reinigung damit leichter, einfacher und schneller und mit größerer Sicherheit durchgeführt werden kann. Das Gitterband ist somit derart anhebbar, daß die Aggregate unterhalb des angehobenen Gitterbandes von der Seite her frei zugänglich werden. In hochgehobenem Zustand entsteht zwischen dem hochgehobenen Trum des Gitterbandes und der Oberfläche der Aggregate ein Abstand in der Größenordnung von 20 bis 30 cm, so daß hier ohne weiteres die Spülmasse mit einer Lanze oder Düse gerichtet und ohne versprühung durch das Gitterband direkt auf die zu reinigenden Aggregate gerichtet werden kann. Andererseits kann als Spülmasse insbesondere Kakaobutter, nicht dagegen Heißwasser, eingesetzt werden, so daß nicht die Gefahr einer Kontamination besteht.

Der Erfindung liegt die Aufgabe zugrunde, ein Verfahren zum Reinigen und eine Überziehmaschine der eingangs beschriebenen Art bereitzustellen, bei der eine gründliche Reinigung der Aggregate und Maschinenteile unter Verwendung von Wasser möglich wird.

Erfindungsgemäß wird dies bei dem Verfahren der eingangs beschriebenen Art dadurch erreicht, daß die Wanne der Überziehmaschine mit vorzugsweise heißem Wasser gefüllt wird, dessen Temperatur oberhalb der Schmelztemperatur der Masse liegt, und daß das eingefüllte Wasser durch eine oder mehrere Förderpumpen in weitgehend druckloser Zirkulation über die zu reinigenden Aggregate und das Gitterband geleitet wird.

Die Erfindung geht von dem Gedanken aus, zwar Wasser zu verwenden, dieses Wasser jedoch nicht unter Verteilwirkung unter Druck auf die Aggregate aufzuspritzen, sondern einen gleichsam weitgehend drucklosen Wasch- bzw. Spülvorgang durchzuführen. Zu diesem Zweck wird die Wanne der Überziehmaschine nach dem Abpumpen der zuvor verarbeiteten Masse mit heißem Wasser gefüllt, dessen Temperatur oberhalb der Schmelztemperatur der Masse liegt. Die Maschine verbleibt dabei in warmem Zustand bzw. wird aufgeheizt bzw. warmgehalten. Das eingefüllte Wasser durch eine oder mehrere Förderpumpen vorzugsweise vermittels eines oder mehrerer Schläuche in weitgehend druckloser Zirkulation über den zu reinigenden Aggregaten zum ausströmen gebracht. Dabei können die wesentlichen zu reinigenden Aggregate der Überziehmaschine vorteilhaft angetrieben werden. Die Verteilung des heißen Wassers erfolgt feinfühlig von Hand je nach dem Verschmutzungsgrad der einzelnen Aggregate. Die an den Aggregaten anhaftenden Reste der Masse werden so auch an schwer zugänglichen Stellen aufgeschmolzen und gelangen in geschmolzenem Zustand in das Wasser, welches im Kreis geführt wird, d. h. der üblicherweise vorgesehene Ablauf an der Wanne ist während dieses Reinigungsverfahrens geschlossen. Der Wasch- und Spülvorgang wird solange durchgeführt, bis die gründliche Reinigung sämtlicher zu reinigender Aggregate erfolgt ist. Die Länge dieses Wasch- bzw. Spülvorgangs kann sich nach Erfahrungswerten richten, die auch masseabhängig sein können. Das neue Verfahren erlaubt eine gründlichere Reinigung als im Stand der Technik, wobei die Zeitdauer für den Wasch- und Spülvorgang im Vergleich zum Stand der Technik verkürzt ist. Auch das obere Trum des Gitterbandes einschließlich der Umlenkungen kann in den Wasch- und Spülvorgang einbezogen werden. Die Wanne der Überziehmaschine wird dann mit heißem Wasser soweit gefüllt, daß auch das obere Trum des Gitterbandes unterhalb der Wasserlinie liegt. Durch die ständige Benetzung aller wesentlichen zu reinigenden Aggregate wird die Reinigung intensiviert und läuft in vergleichsweise kürzerer Zeit ab.

Insbesondere wird der Doppelmantel der Wanne so hoch aufgeheizt, daß das Wasser eine Temperatur erhält bzw. behält, die oberhalb der Schmelztemperatur der Masse liegt. Der Doppelmantel schützt das eingefüllte Wasser vor Temperaturverlust während des Spülund Reinigungsvorgangs.

Dem Wasser kann ein Lösungsmittel, insbesondere ein Fettlöser, hinzugefügt werden. Damit wird der Abschmelzvorgang durch einen Lösevorgang unterstützt.

Das Wasser kann während des Wasch- und Spülvorgangs zusätzlich durch Einleitung von Ultraschallschwingungen angeregt werden. Dies kann an einer oder mehreren Stellen gleichzeitig geschehen. Zu diesem Zweck sind eine oder mehrere Ultraschall-Sonotroden in der Überziehmaschine eingebaut oder leicht einbaubar. Die Ultraschall-Sonotroden sind unterhalb des maximalen Wasserspiegels plaziert.

Das heiße Wasser kann mit einer Temperatur von etwa 45 °C in die Wanne eingefüllt werden, die damit oberhalb der Schmelztemperatur der Masse liegt. Es ist aber auch möglich, das Wasser mit dem Doppelmantel aufzuheizen oder auf Temperatur zu halten.

Für die Reinigung der Überziehmaschine von Schokolademasse sollte das Wasser mindestens auf 45 °C erwärmt werden, damit der beabsichtigte Abschmelzvorgang stattfinden kann. Dabei werden auch alle Kristalle in den flüssigen Zustand überführt. Die Antriebswalze des Gitterbandes und die Umlenkungen im oberen Trum des Gitterbandes stellt Aggregate dar, welche erfahrungsgemäß einer erhöhten Ablagerung von Masse unterliegen. Um diese Aggregate rundum gründlich zu reinigen, ist es erforderlich, das heiße Wasser vergleichsweise höher einzufüllen, als es dem Spiegel der Schokolademasse während des normalen Arbeitens der Überziehmaschine entspricht. Nach erfolgter Reinigung wird das verschmutzte, kontaminierte Wasser zur ordnungsgemäßen Entsorgung abgepumpt. Dies kann unter Nutzung der Rückförderpumpe oder einer Wasserpumpe geschehen.

Im Anschluß an den Wasch- und Spülvorgang mit dem heißem Wasser kann eine Aufheizung der wesentlichen zu reinigenden Aggregate der Überziehmaschine mit Heißwasser von etwa 65 bis 80 °C erfolgen, so daß nach der Abfuhr des Heißwassers die wesentlichen zu reinigenden Aggregate durch eine Verdampfungsreaktion abtrocknen. Dabei kann auch bei weiterhin beheiztem Doppelmantel das Gebläse der Überziehmaschine dazu benutzt werden, um Luft auf die Aggregate und durch das Gitterband zu blasen. Auch während dieses Trocknungsvorgangs bleibt die Überziehmaschine aufgeheizt. Der gesamte Spül-, Reinigungs- und Trocknungsvorgang verkürzt sich damit auf insgesamt etwa drei Stunden. Die Trocknung nimmt dabei etwa einen Zeitraum von einer halben Stunde ein. Bei zusätzlichem Einsatz von Ultraschallsonden kann die Reinigungszeit auf etwa 1,5 Stunden reduziert werden.

Um mit der Reinigung der Überziehmaschine auch die Bodenüberziehstation zu erfassen, kann es erforderlich sein, daß das zum Schleierkasten führende Verteilerrohr durch einen in den Tunkkasten der Bodenüberziehstation gerichteten Rohrbogen ersetzt wird, und daß während des Antriebes des Gitterbandes auch die Schleierpumpe eingeschaltet wird. Damit wird die Schleierpumpe, die normalerweise für die Umwälzung und Förderung der Masse zum Schleierkasten vorgesehen ist, als Förderpumpe für das heiße Wasser genutzt, welches auf diesem Wege zur Reinigung der Bodenüberziehstation herangezogen wird. Es versteht sich, daß auch die Bodenüberziehstation während dieser Reinigung in Tätigkeit gesetzt ist. Auch die Heizung des Doppelmantels wird während der gesamten Reinigung betrieben. Es ist sogar sinnvoll, eine höhere Heizleistung einzubauen, als es für den normalen Betrieb der Überziehmaschine erforderlich ist, um während der Reinigung verstärkt Wärme über den Doppelmantel der Überziehmaschine zuzuführen. Auf diese Weise ist sichergestellt, daß das heiß eingefüllte Wasser während der Reinigung nicht abkühlt, sondern verläßlich auf der erforderlichen Temperatur für den Aufschmelzvorgang gehalten wird.

Im Anschluß an den Wasch- und Spülvorgang kann eine Trocknung durchgeführt werden, indem bei weiterhin beheiztem Doppelmantel das Gebläse der Überziehmaschine dazu benutzt wird, um Luft auf die Aggregate und durch das Gitterband zu blasen. Auch während dieses Trocknungsvorgangs bleibt die Überziehmaschine aufgeheizt. Auch während dieser Trocknung wird das Gitterband, die Schleierpumpe und die dieser vorgeschaltete Mischschnecke angetrieben. Die Rohrverbindung zwischen der Überziehmaschine und der Rückförderpumpe kann dabei entfernt sein. Das Gebläse der Überziehmaschine wird mit einer erhöhten Leistung betrieben. Bei der angesaugten Luft kann es sich um Raumluft handeln. Der gesamte Spül-, Reinigungs- und Trocknungsvorgang verkürzt sich damit auf insgesamt etwa zwei Stunden. Die Trocknung nimmt dabei etwa einen Zeitraum von einer halben Stunde ein.

Die reinigbare Überziehmaschine zur Verarbeitung von Schokolade und ähnlichen Massen arbeitet mit Wasser. Sie ist mit einem Rahmen und einem darin gelagerten, umlaufend angetriebenen Gitterband zur Aufnahme der zu überziehenden Artikel versehen, das über Umlenkungen geführt ist. Oberhalb einer Wanne mit Doppelmantel sind Aggregate vorgesehen, insbesondere eine Bodenüberziehstation mit Tunkkasten und eine Rüttelvorrichtung, unter dem oberen Trum des Gitterbandes. Ein Schleierkasten und ein Gebläse sind über dem oberen Trum des Gitterbandes angeordnet. Diese Überziehmaschine kennzeichnet sich erfindungsgemäß dadurch, daß die Wanne der Überziehmaschine eine Seitenwandung aufweist, die bis über das obere Trum des Gitterbandes hochgezogen ausgebildet ist. Damit befinden sich auch die oberhalb der Antriebswelle angeordneten Elemente, insbesondere das obere Trum des Gitterbandes einschließlich der Umlenkungen unterhalb der Wasserlinie und werden vom Spül- und Reinigungsvorgang mit erfasst. Es wird eine ständige Benetzung aller Elemente erreicht, die mit der Schokoladenmasse in Berührung kommen.

Die Wanne der Überziehmaschine kann einen Niveaufühler für das Einfüllen des heißen Wassers aufweisen, der oberhalb des oberen Trums des Gitterbandes angeordnet ist. Damit ist es möglich, die Wanne der Überziehmaschine verläßlich mit dem heißen Wasser bis zu einer Wasserlinie zu füllen, so daß sämtliche der Verschmutzung unterliegenden Elemente und Aggregate unterhalb des Wasserspiegels zu liegen kommen. Die Füllung läßt sich über den Niveaufühler automatisch steuern bzw. beenden. Eine solche Einmalfüllung reicht für die ordnungsgemäße Reinigung der gesamten Überziehmaschine aus, was andererseits aber nicht ausschließt, daß z. B. ein zweiter Reinigungsvorgang mit einer zweiten Füllung heißen Wassers, eventuell unter Hinzufügung eines Reinigungs-, Lösungs- oder Desinfektionsmittels, angeschlossen werden kann.

In der Wanne der Überziehmaschine können eine oder mehrere Ultraschallsonden unterhalb der maximalen Wasserlinie angeordnet oder einsetzbar sein. Die Ultraschallsonden können fest in die Überziehmaschine eingebaut sein. Andererseits ist es möglich, die Ultraschallsonden leicht einbaubar zu gestalten, damit sie je nach Verschmutzungsgrad auch an unterschiedlichen Stellen angebracht werden können.

Es kann eine gesonderte Wasserpumpe für die Umwälzung des heißen Wassers und des Heißwassers vorgesehen sein. Diese Wasserpumpe ist in der Überziehmaschine fest eingebaut. Es kann aber auch die ohnehin vorhandene Rückförderpumpe genutzt werden, um das Wasser während des Spül- und Reinigungsvorgangs umzuwälzen.

Die neue gründliche Naßreinigung kann in vergleichsweise kürzerer Zeit und mit besserem Reinigungsergebnis als im Stand der Technik durchgeführt werden. Außerdem besteht nicht die Gefahr, daß sich die die Reinigung durchführenden oder überwachenden Personen verschmutzen. Die Reinigung kann auch dort durchgeführt werden, wo kein Wasserablauf im Bereich der Überziehmaschine vorhanden ist. Am Ende der Reinigung kann das Wasser einschließlich der aufgeschmolzenen Masse unter Verwendung der Rückförderpumpe auch in einen bereitstehenden Behälter abgepumpt oder in den bauseitigen Abfluß abgelassen werden.

Die Überziehmaschine kann sich auch dadurch kennzeichnen, daß die Wanne der Überziehmaschine einen Niveaufühler für das Einfüllen des heißen Wassers aufweist, der oberhalb der Antriebswalze des Gitterbandes angeordnet ist, und daß der Schleierkasten und das zu ihm führende Verteilerrohr, in der Überziehmaschine leicht ausbaubar angeordnet sind. Damit ist es möglich, die Wanne der Überziehmaschine verläßlich mit der heißen Flüssigkeit bis zu einem Spiegel zu füllen, so daß die Antriebswalze des Gitterbandes unterhalb des Wasserspiegels zu liegen kommt. Die Füllung läßt sich über den Niveaufühler automatisch steuern bzw. beenden. Eine solche Einmalfüllung reicht für die ordnungsgemäße Reinigung der gesamten Überziehmaschine aus, was andererseits aber nicht ausschließt, daß z. B. ein zweiter Reinigungsvorgang mit einer zweiten Füllung heißen Wassers, eventuell unter Hinzufügung eines Reinigungs- oder Desinfektionsmittels, angeschlossen werden kann.

Die angetriebenen Elemente der Überziehmaschine können während der Reinigung mit erhöhter Drehzahl angetrieben werden. Dazu können vorteilhaft die in vielen Fällen ohnehin regelbaren Antriebe genutzt werden. So ist z. B. der Antrieb des Gitterbandes und/oder der Schleierpumpe und/oder des Gebläses auf eine erhöhte Drehzahl umschaltbar. Es ist möglich, neben normalen Betriebsprogrammen auch ein oder zwei Reinigungsprogramme in die Steuereinheit der Überziehmaschine einzuspeichern.

Von besonderem Vorteil ist es, wenn die Rückförderpumpe für die Masse von der Rückleitung trennbar und an einen oder mehrere Schläuche anschließbar ausgebildet ist. Die zum Vorratsbehälter der Temperiermaschine zurückführende Rückleitung wird von der Rückförderpumpe der Überziehmaschine getrennt, und an den Ausgang der Rückförderpumpe werden ein oder zwei Schläuche angeschlossen. Die Rückförderpumpe ist so ausgebildet, daß sie in gleicher Weise Masse wie auch Wasser fördern kann. Die beweglichen Schläuche werden von Bedienungspersonen gehandhabt. Die Schläuche besitzen eine Länge, daß alle für die Reinigung wesentlichen Stellen der Überziehmaschine erreicht werden können. Die Rückförderpumpe wird lediglich als Förderpumpe für das Wasser benutzt. Auch hier ist es nicht Sinn, einen Spritzvorgang mit mechanischem Abnehmen der Reste der Masse durchzuführen, sondern lediglich einen moderaten Spülvorgang vorzunehmen, so daß das Abschmelzen der Reste der Masse von den Aggregaten und Elementen der Überziehmaschine stattfinden kann. Es versteht sich, daß der Anschluß von mehreren Schläuchen und deren Handhabung die Reinigungszeit entsprechend verkürzt.

Anstatt die ohnehin vorhandene Rückförderpumpe zu nutzen, ist es aber auch möglich, eine gesonderte Wasserpumpe vorzusehen, die an die Wanne angeschlossen und mit einem oder mehreren Schläuchen versehen ist. Die Handhabung dieser Schläuche geschieht analog.

Die Schleierpumpe kann zwecks Drehzahlveränderung einen polumschaltbaren Motor oder einen Frequenzumformer und an der tiefsten Stelle ihres Gehäuses eine verschließbare Entleerungsöffnung aufweisen. Während der Reinigung mit dem Wasser ist die Entleerungsöffnung an der tiefsten Stelle des Gehäuses der Schleierpumpe geschlossen, weil die Füllung der Wanne mit heißem Wasser im Umlauf zu Reinigungszwecken benutzt wird. Der Wasserverbrauch ist damit entsprechend sparsam. Erst am Ende der Naßreinigung wird die Entleerungsöffnung geöffnet und das Wasser einschließlich der aufgeschmolzenen Masse aus dem Pumpengehäuse der Schleierpumpe entfernt.

Um die Reinigung der Aggregate und Teile der Überziehmaschine noch effektiver zu gestalten, kann sie eine Mehrzahl leicht ausbaubarer Aggregate aufweisen, insbesondere den Schleierkasten, das Verteilerrohr, die Abdeckung des Tunkkastens, eine Rüttelvorrichtung, eine Entschwänzereinrichtung und dgl..

Die Überziehmaschine ist auch so konstruiert, daß sich an die Naßreinigung eine effektive Trocknung anschließen kann. Hierzu wird die Rückförderpumpe von der Überziehmaschine getrennt. Die Entleerungsöffnung der Schleierpumpe wird geöffnet. Auch während dieser Trocknung wird das Gitterband, die Mischschnecke und die Schleierpumpe angetrieben. Das Gebläse der Überziehmaschine wird auf maximal mögliche Leistung eingestellt. Auch während dieser Trocknung wird der Doppelmantel der Überziehmaschine beheizt.

Die neue gründliche Naßreinigung kann in vergleichsweise kürzerer Zeit und mit besserem Reinigungsergebnis als im Stand der Technik durchgeführt werden. Außerdem besteht nicht die Gefahr, daß sich die die Reinigung mit den Schläuchen durchführenden Personen verschmutzen. Die Reinigung kann auch dort durchgeführt werden, wo kein Wasserablauf im Bereich der Überziehmaschine vorhanden ist. Am Ende der Reinigung kann das Wasser einschließlich der aufgeschmolzenen Masse durch einen der Spülschläuche unter Verwendung der Rückförderpumpe auch in einen bereitstehenden Behälter abgepumpt werden.

Die Erfindung wird anhand bevorzugter Ausführungsbeispiele weiter erläutert und beschrieben. Es zeigen:
- Fig. 1: eine schematisierte Seitenansicht der Überziehmaschine mit den für die Erfindung wesentlichen Einzelteilen während der Produktion,
- Fig. 2: eine schematisierte Seitenansicht der Überziehmaschine gemäß Fig. 1 während der Reinigung mit Wasser,
- Fig. 3: eine ähnliche Darstellung wie Fig. 2, jedoch bei einer anderen Ausführungsform der Überziehmaschine,
- Fig. 4: die Überziehmaschine gemäß Fig. 1 während der abschließenden Trocknung,
- Fig. 5: eine schematisierte Seitenansicht einer Überziehmaschine in einer zweiten Ausführungsform mit den für die Erfindung wesentlichen Einzelteilen, und
- Fig. 6: eine Stirnansicht der Überziehmaschine gemäß Fig. 5.

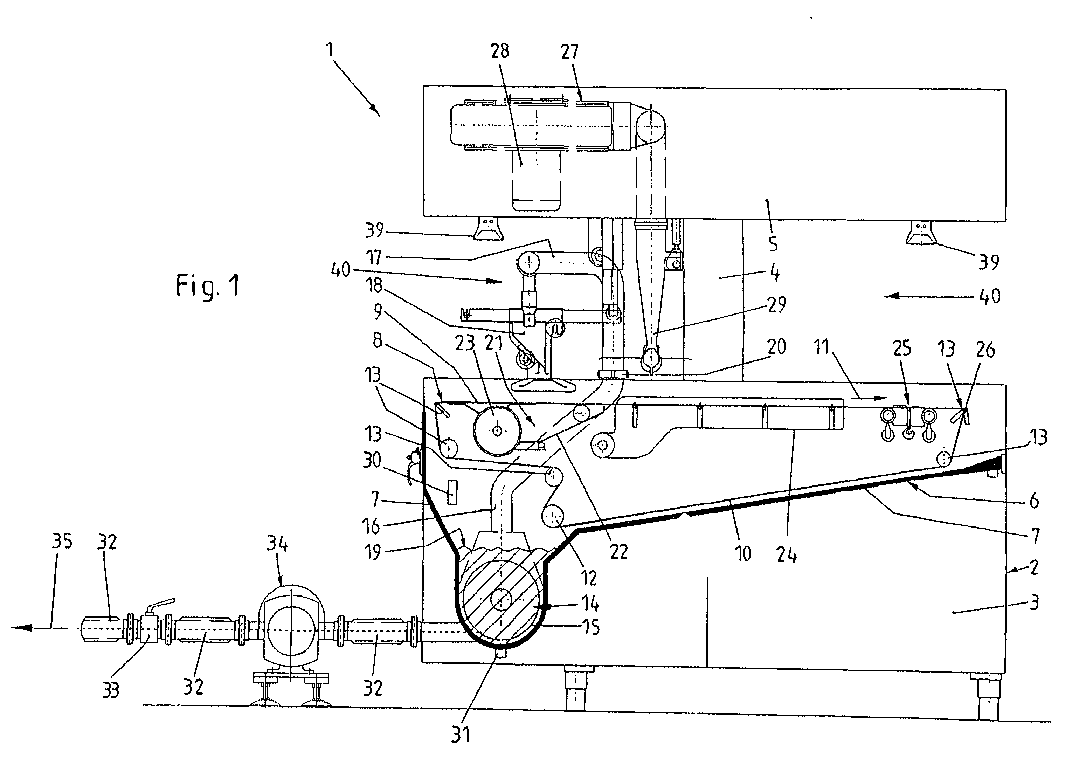

Die in Fig. 1 dargestellte Überziehmaschine 1 weist einen Rahmen 2 auf, der ein tischartiges Untergestell 3 trägt, in welchem wesentliche Elemente der Überziehmaschine 1 untergebracht sind. Von dem Untergestell 3 erhebt sich ein säulenartiger Aufbau 4 nach oben, der ein Oberteil 5 trägt, in welchem weitere Aggregate untergebracht sind.

In dem Untergestell 3 ist eine trogartige Wanne 6 untergebracht, die zum Auffangen überschüssiger Schokolademasse dient, die oberhalb der Wanne 6 verarbeitet wird. Die Wanne 6 ist mit einem Doppelmantel 7 ausgestattet, der in bekannter Weise an einen hier nicht näher dargestellten heizbaren Wasserkreislauf angeschlossen ist. Es können auch mehrere Sektionen des Doppelmantels 7 gebildet und vorgesehen sein. Dieser Doppelmantel 7 dient normalerweise der Erwärmung der Wanne 6, um das Aufbauen und Absetzen von in den festen Zustand übergehender Schokolademasse während der Produktion zu verhindern.

Innerhalb des Untergestells 3 und oberhalb der Wanne 6 ist ein Gitterband 8 vorgesehen, welches ein oberes Trum 9 und ein unteres Trum 10 aufweist. Das Gitterband 8 wird gemäß Pfeil 11 umlaufend angetrieben. Der Antrieb erfolgt über eine Antriebswalze 12 und einen hier nicht näher dargestellten Motor. Das Gitterband 8 wird über eine Reihe von Umlenkungen 13 geführt, die teils als Walzen, teils als Messerschneiden ausgebildet sind. Die in der Wanne 6 während der Produktion befindliche Schokolademasse wird von einer Schleierpumpe 14 mit Mischschnecke 15 erfaßt und über ein Steigrohr 16 in ein Verteilerrohr 17 übergeleitet, welches an einen Schleierkasten 18 Anschluß hat, aus welchem die Schokolademasse in freiem Fall auf das Gitterband 8 und die darauf liegenden Warenstücke (nicht dargestellt) fällt und diese von oben her überzieht. Überschüssige Masse fließt bzw. tropft durch das Gitterband 8 und sammelt sich in der Wanne 6. Diese Masse fließt an die tiefste Stelle der Wanne 6 zurück und gelangt wiederum in den Einflußbereich der Schleierpumpe 14. Es stellt sich dabei während der Produktion ein Massespiegel 19 ein. Das Verteilerrohr 17 ist mit Hilfe einer Überwurfmuffe 20 leicht lösbar mit dem Steigrohr 16 verbunden.

Am Beginn des Einlaufes in die Überziehmaschine ist zunächst vor dem Schleierkasten 18 unterhalb des oberen Trums 9 des Gitterbandes 8 eine Bodenüberziehstation 21 vorgesehen, die einen Tunkkasten 22 besitzt, der ebenfalls wannenförmig ausgebildet ist. In dem Tunkkasten 22 ist eine Boden-Tunkwalze 23 drehbar und angetrieben gelagert, die aus dem Tunkkasten 22 Masse entnimmt und von unten durch das obere Trum 9 des Gitterbandes 8 nach oben auswirft, so daß die auf dem oberen Trum 9 des Gitterbandes 8 liegenden Warenstücke auch im Bereich des Bodens mit Schokolade überzogen werden. Der Tunkkasten 22 der Bodenüberziehstation 21 wird durch die aus dem Schleierkasten 18 herabfallende überschüssige Masse gespeist. Der Tunkkasten 22 weist einen Überlauf auf, aus dem heraus überschüssige Masse letztlich wieder in die Wanne 6 gelangt und damit im Kreislauf verbleibt bzw. gefördert wird.

In Bandlaufrichtung gemäß Pfeil 11 befindet sich hinter der Bodenüberziehstation 21 eine Rüttelvorrichtung 24 für das obere Trum 9 des Gitterbandes 8. Nachgeordnet sind eine Bodenabstreichwelle 25 sowie eine Entschwänzereinrichtung 26 vorgesehen. Die Rüttelvorrichtung 24 dient dazu, überschüssige noch flüssige Schokolademasse von den Warenstücken und dem Gitterband 8 abzurütteln. Die Entschwänzereinrichtung 26 dient dazu, Schokolademasse am Ende eines Warenstückes abzunehmen und auf diese Art und Weise erstarrende Vorsprünge (Schwänze) an dem überzogenen Warenstück zu vermeiden. Die Entschwänzereinrichtung 26 besitzt eine angetriebene Welle, die leicht ausbaubar vorgesehen ist. Ebenso ist auch der Schleierkasten 18 leicht ausbaubar angeordnet und vorgesehen. Auch Bestandteile der Rütteleinrichtung 24 können ausgebaut werden, ebenso Abdeckbleche, wie sie im oberen Bereich des Tunkkastens 22 der Bodenüberziehstation 21 genutzt werden. In einem oberhalb des oberen Trums 9 des Gitterbandes 8 gebildeten Überziehraum 40 sind mehrere Heizstrahler 39 vorgesehen, um diesen Bereich ausreichend warm zu halten.

Im Oberteil 5 ist ein Gebläse 27 untergebracht, welches mit einem Motor 28 angetrieben wird, Umgebungsluft ansaugt und über eine Düse 29 auf die mit Masse überzogenen Artikel bläst, so daß die zu diesem Zeitpunkt noch flüssige Masse teilweise abgeblasen wird und so der gewünschte dünnwandige Überzug an dem Warenstück entsteht.

Innerhalb der Wanne 6 ist im unteren Bereich, jedoch oberhalb des Niveaus der Antriebswalze 12, ein Niveaufühler 30 vorgesehen, der während der Produktion keine Funktion erfüllt, sondern lediglich während des Reinigungsvorgangs genutzt wird. Die an der tiefsten Stelle der Wanne 6 vorgesehene Schleierpumpe 14 weist eine Entleerungsöffnung 31 auf, die mit einer hier nicht näher dargestellen Einrichtung, beispielsweise einem Ventil, geöffnet oder abgeschlossen werden kann. Während der Produktion ist diese Entleerungsöffnung 31 geschlossen. Ansonsten ist an die tiefste Stelle der Wanne 6 bzw. die Schleierpumpe 14 eine Rückleitung 32 angeschlossen. In der Rückleitung 32 ist ein von Hand betätigbares Ventil 33 und eine Rückförderpumpe 34 vorgesehen. Die einzelnen dargestellten Abschnitte der Rückleitung 32 sind über leicht handhabbare Überwurfringe oder Schnellkupplungen miteinander verbunden.

Fig. 1 zeigt die Relativstellung der Teile am Ende eines Produktionsvorgangs, bevor die Rückförderung der Schokolademasse durchgeführt wird. Zu diesem Zweck wird das Ventil 33 auf Durchgang gestellt und die Rückförderpumpe 34 in Gang gesetzt, so daß die Schokolademasse aus der Wanne 6 gemäß Pfeil 35 in den nicht näher dargestellten Tank für Schokolademasse gelangt. Die Heizung des Doppelmantels 7 der Wanne 6 bleibt dabei weiterhin eingeschaltet bzw. sogar noch auf eine höhere Temperatur gebracht, wenn eine Reinigung der Überziehmaschine 1 z. B. vor einem Massewechsel erforderlich wird.

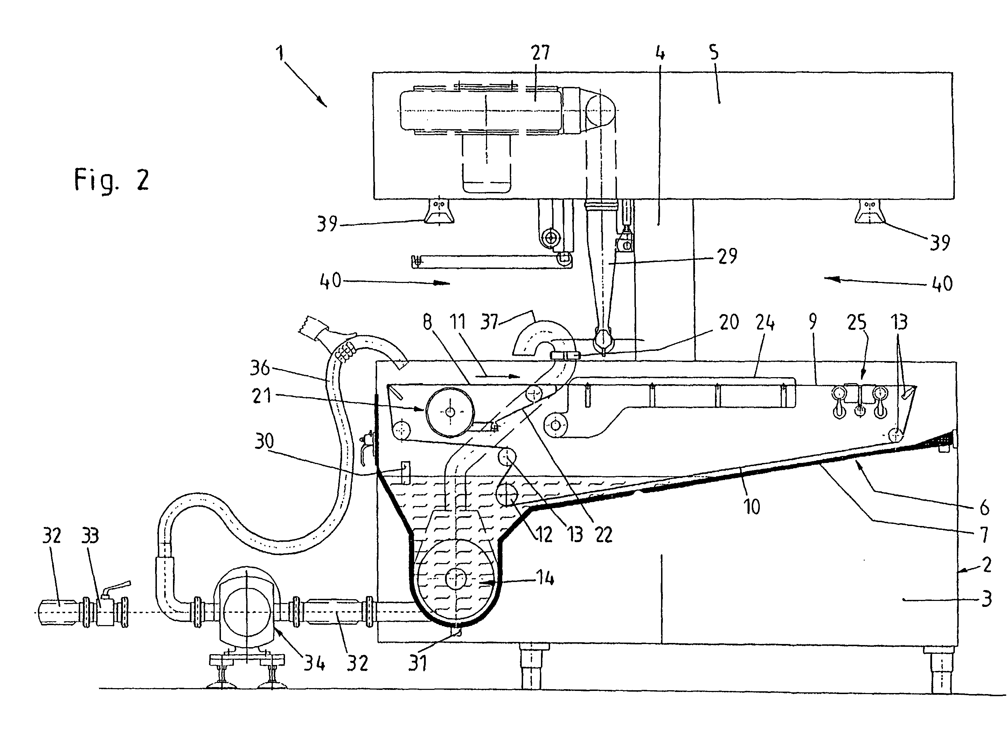

Fig. 2 zeigt die Teile der Überziehmaschine 1 während eines solchen Reinigungsvorgangs mit Wasser. Das Ventil 33 ist geschlossen, und ein Abschnitt der Rückleitung 32 ist ausgebaut und damit von der Rückförderpumpe 34 abgetrennt. Druckseitig ist an die Rückförderpumpe 34 ein Schlauch 36 angeschlossen, der eine gewisse Länge aufweist, so daß sämtliche Aggregate und Stellen der Überziehmaschine 1 oberhalb der Wanne 6 erreichbar sind. Man erkennt, daß der Schleierkasten 18, der leicht lösbar in der Überziehmaschine 1 vorgesehen ist, gelöst und ausgebaut wurde, ebenso die Entschwänzereinrichtung 26. Auch die Überwurfmutter 20 wurde gelöst und das Verteilerrohr 17 entfernt. Stattdessen wurde ein Rohrbogen 37 angeschlossen, der so geformt und in Stellung gebracht wird, daß sein Auslaß in den Tunkkasten 22 gerichtet ist.

Bevor die Reinigung beginnt, wird zunächst die Wanne 6 mit warmem Wasser befüllt, und zwar bis das eingefüllte Wasser auch die Antriebswalze 12 für das Gitterband 8 übersteigt. Es tritt jetzt der Niveaufühler 30 in Aktion, dessen Signal das Einfüllen des heißen Wassers beendet. Dann wird zunächst die Überziehmaschine 1 in Gang gesetzt, wobei die Antriebswalze 12 und die Schleierpumpe 14 in Gang gesetzt werden. Dabei läuft das Gitterband 8 um. Es wird durch das heiße Wasser hindurchgeführt, wobei anhaftende Schokolade von dem Gitterband 8 und der Antriebswalze 12 abgeschmolzen werden. Das heiße Wasser wird auch von dem Gitterband 8 mitgenommen und benetzt auch die Umlenkungen 13, so daß diese ebenfalls auf Temperatur gehalten bzw. dort anhaftende Schokolade aufgeschmolzen wird. Bereits während dieses drucklosen Umwälzvorgangs des heißen eingefüllten Wassers und/oder nach einer gewissen Betriebszeit kann die Rückförderpumpe 34 in Gang gesetzt werden, so daß auch über den Schlauch 36 heißes Wasser zum Ausströmen gebracht wird. Die Bedienungsperson kann dabei mit Hilfe des Schlauches 36 dieses Wasser gezielt auf die Aggregate leiten, um jeweils dort einen Aufschmelzvorgang und eine Reinigungswirkung zu erzielen. Dies gilt für alle Elemente, die oberhalb der Wanne 6 vorgesehen sind. Die ausgebauten Teile, insbesondere der Schleierkasten 18, das Verteilerrohr 17 und die Entschwänzereinrichtung 26 werden außerhalb der Überziehmaschine 1 gereinigt. Der Vergleich der Fig. 1 und 2 zeigt, daß das heiß eingefüllte Wasser bis zu dem Niveaufühler 30 eingefüllt wird, also wesentlich höher vorhanden ist als die Schokolademasse mit ihrem Massespiegel 19 während der Produktion. Dieser Unterschied zielt in erster Linie darauf ab, die Antriebswalze 12 völlig unter Wasser zu haben und sorgfältig zu reinigen. Die Antriebswalze 12 ist ein Element, an welchem sich Schokolade während der Produktion in besonderem Maße absetzt. Da der drucklose Spülvorgang während des Antriebs der wesentlichen Aggregate stattfindet, werden z. B. auch Wellen und Umlenkungen 13 auf ihrer Unterseite von der Spülflüssigkeit erfaßt und verläßlich gereinigt. Die Schokolademasse wird zum Aufschmelzen gebracht. Das eingefüllte Wasser, welches im Kreislauf verbleibt, verbleibt dabei heiß, weil es durch den Doppelmantel 7 aufgeheizt bzw. heiß gehalten wird. Die Elemente innerhalb der Wanne 6 und auch beispielsweise die Rückförderpumpe 34 nehmen dabei ebenfalls die Temperatur des heißen Wassers an, so daß auch dort eine Reinigung stattfindet. Gleiches gilt auch für die Schleierpumpe 14 mit der vorgeschalteten Mischschnecke 15. Zur Beschleunigung des Wasch- und Spülvorgangs wird das Gitterband 8 und die Schleierpumpe 14 mit erhöhter Geschwindigkeit angetrieben.

Sobald sämtliche Schokolademasse der Überziehmaschine 1 aufgeschmolzen und alle Aggregate und Elemente gereinigt sind, wird das heiße Wasser und die darin befindliche aufgeschmolzene Schokolademasse unter weiterer Nutzung der Rückförderpumpe 34 und des Schlauches 36 in einen Ablauf oder einen bereitgestellten Behälter gepumpt. Am Ende kann auch die Entleerungsöffnung 31 der Schleierpumpe 14 geöffnet werden, um auch die letzten Reste von heißem Wasser, die in der Wanne 6 stehen, abzulassen bzw. hinwegzuführen.

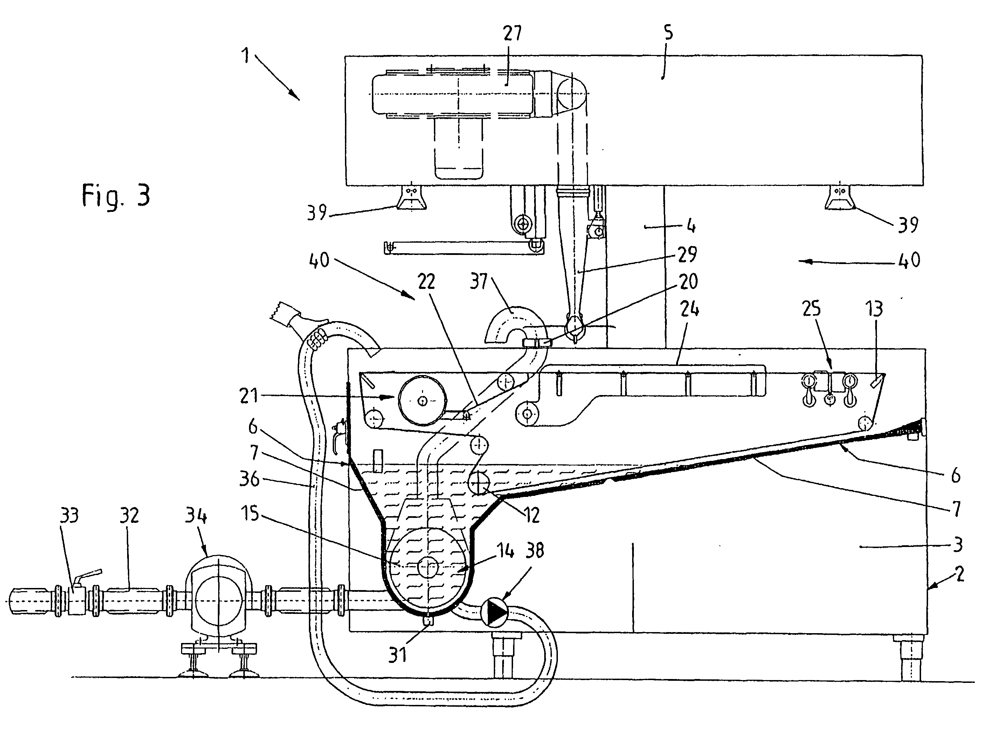

Die in Fig. 3 dargestellte Ausführungsform entspricht in weiten Bereichen der zuvor anhand der Fig. 1 und 2 beschriebenen Ausführungsform, so daß hierauf verwiesen werden kann. Es ist lediglich zusätzlich eine gesonderte Wasserpumpe 38 vorgesehen, die speziell auf das Pumpen von Wasser abgestimmt ist. Die Wasserpumpe 38 dient dem Anschluß des Schlauches 36 und übernimmt während der Reinigung eine Funktion der Rückförderpumpe 34, die hier nur zum Abpumpen der zuletzt in der Produktion befindlichen Masse benutzt wird. Die Rückförderpumpe 34 wird hier separat gereinigt, wie dies auch für den Schleierkasten 18 sowie weitere Elemente, beispielsweise das Verteilerrohr 17, vorgesehen ist.

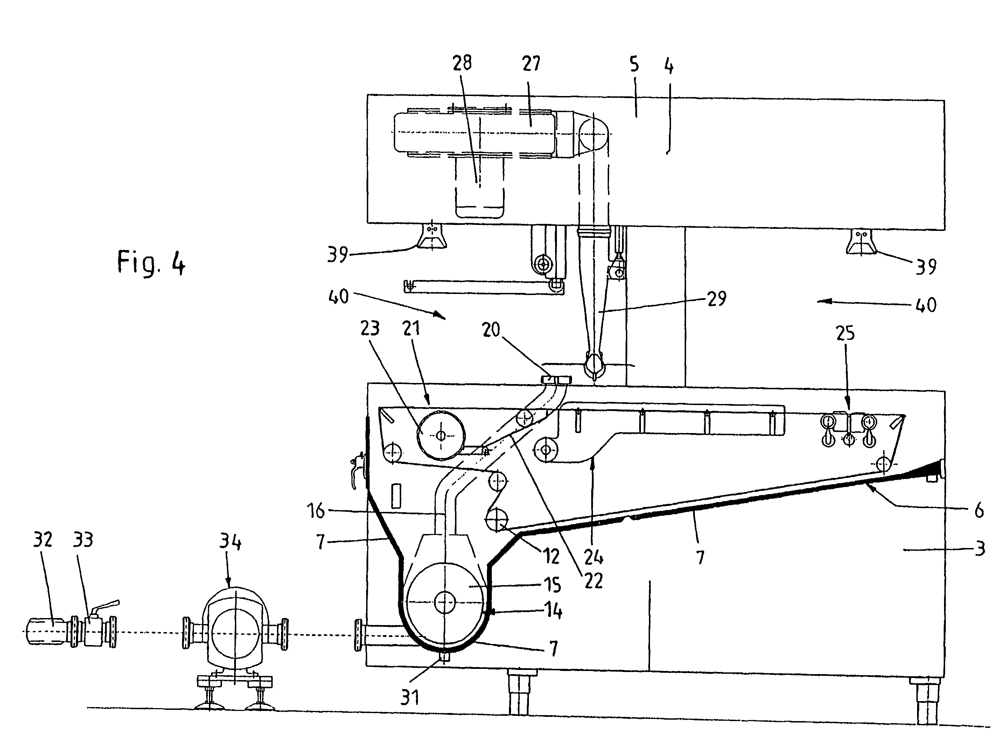

Fig. 4 zeigt die Überziehmaschine 1 gemäß den Fig. 1 und 2 in einem nachgeschalteten Trocknungsvorgang. Man erkennt, daß der Schlauch 36 von der Rückförderpumpe 34 getrennt wurde. Ebenfalls wurden weitere Abschnitte der Rückleitung 32 abgenommen, so daß die durchwärmte Rückförderpumpe 34 nunmehr trocknen kann. Die Entleerungsöffnung 31 der Schleierpumpe 14 bleibt weiterhin geöffnet. Auch das Gitterband 8 wird noch weiterhin angetrieben. Das heiße Wasser und die aufgeschmolzene Schokolade ist aus der Überziehmaschine 1 entfernt. Es wird nunmehr das Gebläse 27 in Gang gesetzt, wobei dies sogar vorzugsweise mit erhöhter Drehzahl betrieben wird. Es wird dabei Luft über die Düse 29 auf die Elemente der Maschine geleitet, so daß hier ein Trocknungsvorgang abläuft. Die elektrischen Heizstrahler 39 bleiben eingeschaltet. Während dieses Trocknungsvorgangs wird der Doppelmantel 7 der Wanne 6 ebenfalls weiterhin beheizt, bis die Teile trocken sind. Auch die Schleierpumpe 14 wird getrocknet, da diese aus dem durchwärmten Zustand heraus von Luft des Gebläses 27 überströmt wird. Es versteht sich, daß auch die außerhalb der Überziehmaschine 1 gereinigten Teile einem Trocknungsvorgang unterworfen werden, bevor die einzelnen Elemente wieder zusammengebaut werden, so daß sie die Relativposition gemäß Fig. 1 einnehmen. Es kann dann die neue Masse eingefüllt und die Maschine entsprechend betrieben werden.

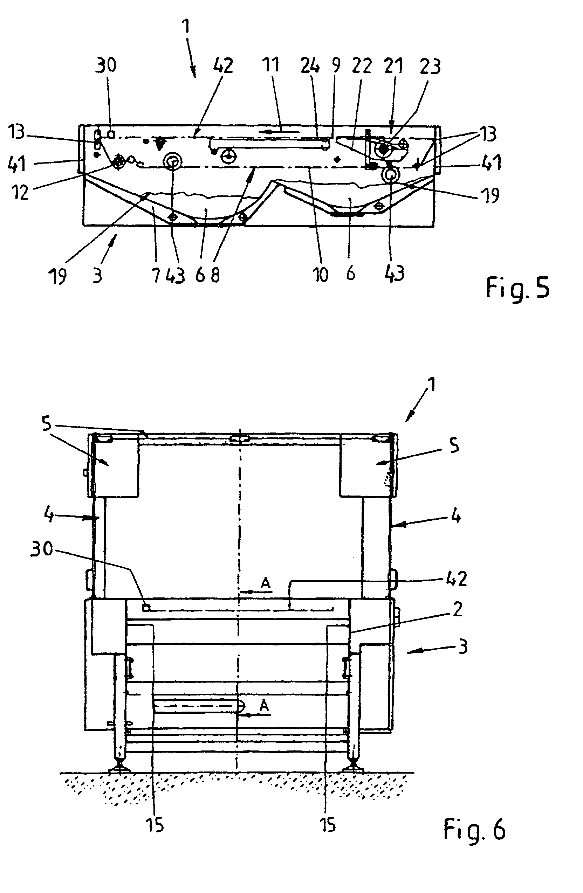

Auch die in den Fig. 5 und 6 dargestellte Überziehmaschine 1 weist einen ähnlichen Aufbau auf wie das in den Fig. 1 bis 4 dargestellte Ausführungsbeispiel. Hierauf wird hingewiesen.

Innerhalb des Rahmens 2 und oberhalb der Wanne 6 ist das Gitterband 8 vorgesehen, welches das obere Trum 9 und das untere Trum 10 aufweist. Das Gitterband 8 wird gemäß Pfeil 11 umlaufend angetrieben. Der Antrieb erfolgt über die Antriebswalze 12 und den hier nicht näher dargestellten Motor. Das Gitterband 8 wird über eine Reihe von Umlenkungen 13 geführt, die teils als Walzen, teils als Messerschneiden ausgebildet sind. Die in der Wanne 6 während der Produktion befindliche Schokolademasse wird in bekannter Weise von der Schleierpumpe erfaßt und über das Steigrohr in das Verteilerrohr übergeleitet, welches an den Schleierkasten oder einen Verteiler Anschluß hat, von welchem die Schokolademasse in freiem Fall auf das Gitterband 8 und die darauf liegenden Warenstücke (nicht dargestellt) fällt und diese von oben her überzieht. Überschüssige Masse fließt bzw. tropft durch das Gitterband 8 und sammelt sich in der Wanne 6. Diese Masse fließt an die tiefste Stelle der Wanne 6 zurück und gelangt wiederum in den Einflußbereich der Schleierpumpe oder einer Rückförderpumpe. Es stellt sich dabei während der Produktion ein Massespiegel 19 ein. Die Wanne 6 weist eine hochgezogene umlaufende Seitenwandung 41 auf. Ein Teil der Seitenwandung 41, insbesondere in den stirnseitigen Bereichen des Einlaufs und des Auslaufs der Überziehmaschine 1, sind als abnehmbare Verschlußelemente ausgebildet, um während der normalen Produktion das Einlaufen bzw. den Anschluß von Förderbändern für die Warenstücke oder andere Elemente möglich zu machen. Die Seitenwandung 41 besitzt eine solche Gestaltung und ist umlaufend um das obere Trum des Gitterbandes 8 vorgesehen, so daß die Wanne 6 zu Spül- und Reinigungszwecken mit insbesondere heißem Wasser bis zu einer Wasserlinie 42 befüllbar ist, bei deren Erreichen auch das obere Trum 9 des Gitterbandes 8 unter Wasser liegt. Innerhalb der Wanne 6, und zwar unterhalb der Wasserlinie 42 sind ein oder mehrere Ultraschall-Sonotroden 43 angeordnet, mit deren Hilfe die Reinigung unterstützende Ultraschallschwingungen in das heiße Wasser eingeleitet werden.

Am Beginn des Einlaufes in die Überziehmaschine 1 ist zunächst vor dem Schleierkasten unterhalb des oberen Trums 9 des Gitterbandes 8 eine Bodenüberziehstation 21 vorgesehen, die einen Tunkkasten besitzt, der ebenfalls wannenförmig ausgebildet ist. In dem Tunkkasten ist eine Boden-Tunkwalze drehbar und angetrieben gelagert, die aus dem Tunkkasten Masse entnimmt und von unten durch das obere Trum 9 des Gitterbandes 8 nach oben auswirft, so daß die auf dem oberen Trum 9 des Gitterbandes 8 liegenden Warenstücke auch im Bereich des Bodens mit Schokolade überzogen werden. Der Tunkkasten der Bodenüberziehstation 21 wird durch die aus dem Schleierkasten herabfallende überschüssige Masse gespeist. Der Tunkkasten weist einen Überlauf auf, aus dem heraus überschüssige Masse letztlich wieder in die Wanne 6 gelangt und damit im Kreislauf verbleibt bzw. gefördert wird.

In Bandlaufrichtung gemäß Pfeil 11 befindet sich hinter der Bodenüberziehstation 21 eine Rüttelvorrichtung 24 für das obere Trum 9 des Gitterbandes 8. Nachgeordnet sind eine Bodenabstreichwelle sowie eine Entschwänzereinrichtung vorgesehen. Die Rüttelvorrichtung 24 dient dazu, überschüssige noch flüssige Schokolademasse von den Warenstücken und dem Gitterband 8 abzurütteln. Die Entschwänzereinrichtung dient dazu, Schokolademasse am Ende eines Warenstückes abzunehmen und auf diese Art und Weise erstarrende Vorsprünge (Schwänze) an dem überzogenen Warenstück zu vermeiden.

Innerhalb der Wanne 6 ist im unteren Bereich, jedoch oberhalb des Niveaus des oberen Trums 9 des Gitterbandes 8 ein Niveaufühler 30 vorgesehen, der während der Produktion keine Funktion erfüllt, sondern lediglich während des Reinigungsvorgangs genutzt wird.

Fig. 5 zeigt die Relativstellung der Teile am Ende eines Produktionsvorgangs, bevor die Rückförderung der Schokolademasse durchgeführt wird. Nach der Entleerung der Schokolademasse erfolgt die Befüllung der Wanne 6 mit heißem Wasser, beispielsweise von 45 °C. Der Niveaufühler 30 überwacht den Wassereinlauf und beendet den Füllvorgang. Über eine oder mehrere (nicht dargestellte) Förderpumpen wird das heiße Wasser in weitgehend druckloser Zirkulation über die zu reinigenden Aggregate geleitet, während die wesentlichen zu reinigenden Aggregate der überziehmaschine 1 und das Gitterband 8, angetrieben werden. Die Heizung des Doppelmantels 7 der Wanne 6 bleibt dabei weiterhin eingeschaltet bzw. sogar noch auf eine höhere Temperatur gebracht, wenn eine Reinigung der Überziehmaschine 1 z. B. vor einem Massewechsel erforderlich wird. Um die Reinigung zu intensivieren, werden die Ultraschall-Sonotroden 43 eingeschaltet. Zusätzlich kann ein Reinigungs- und Lösemittel für Fette dem heißen Wasser beigemischt werden. Damit ergibt sich eine Dreifachwirkung, nämlich ein Abspülen von Schokoladeresten durch Aufschmelzen, eine mechanische Entfernung durch Schwingungen und ein Lösen von Fett durch das Lösemittel.

Da der drucklose Spülvorgang während des Antriebs der wesentlichen Aggregate stattfindet, werden z. B. auch Wellen und Umlenkungen 13 auf ihrer Unterseite von der Spülflüssigkeit erfaßt und verläßlich gereinigt. Die Schokolademasse wird zum Aufschmelzen gebracht. Das eingefüllte Wasser, welches im Kreislauf verbleibt, verbleibt dabei heiß, weil es durch den Doppelmantel 7 aufgeheizt bzw. heiß gehalten wird. Die Elemente innerhalb der Wanne 6 und auch beispielsweise die Förderpumpe nehmen dabei ebenfalls die Temperatur des heißen Wassers an, so daß auch dort eine Reinigung stattfindet. Zur Beschleunigung des Wasch- und Spülvorgangs kann das Gitterband 8 und die Schleierpumpe mit erhöhter Geschwindigkeit angetrieben werden.

Sobald sämtliche Schokolademasse der Überziehmaschine 1 aufgeschmolzen und alle Aggregate und Elemente gereinigt sind, wird das heiße Wasser und die darin befindliche aufgeschmolzene Schokolademasse unter weiterer Nutzung der Förderpumpe oder der Wasserpumpe in einen Ablauf oder einen bereitgestellten Behälter gepumpt. Anschließend wird die Wanne 6 mit Heißwasser (65 bis 80 °C) befüllt. Auch hier beendet der Niveaufühler 30 den Füllvorgang. Auch mit diesem Heißwasser erfolgt ein Spül- und Reinigungsvorgang. Dabei werden die Aggregate noch höher aufgeheizt als bei dem vorangehenden Spülvorgang mit dem heißen Wasser. Nach dem Ablassen des Heißwassers findet eine Verdampfungsreaktion an den heißen Aggregaten statt, so daß die Aggregate abtrocknen.

### BEZUGSZEICHENLISTE

- 1 -: Überziehmaschine
- 2 -: Rahmen
- 3 -: Untergestell
- 4 -: Säule
- 5 -: Oberteil
- 6 -: Wanne
- 7 -: Doppelmantel
- 8 -: Gitterband
- 9 -: oberes Trum
- 10 -: unteres Trum
- 11 -: Pfeil
- 12 -: Antriebswwalze
- 13 -: Umlenkung
- 14 -: Schleierpumpe
- 15 -: Mischschnecke
- 16 -: Steigrohr
- 17 -: Verteilerrohr
- 18 -: Schleierkasten
- 19 -: Massespiegel
- 20 -: Überwurfmuffe
- 21 -: Bodenüberziehstation
- 22 -: Tunkkasten
- 23 -: Boden-Tunkwalze
- 24 -: Rüttelvorrichtung
- 25 -: Bodenabstreichwelle
- 26 -: Entschwänzereinrichtung
- 27 -: Gebläse
- 28 -: Motor
- 29 -: Düse
- 30 -: Niveaufühler
- 31 -: Entleerungsöffnung
- 32 -: Rückleitung
- 33 -: Ventil
- 34 -: Rückförderpumpe
- 35 -: Pfeil
- 36 -: Schlauch
- 37 -: Rohrbogen
- 38 -: Wasserpumpe
- 39 -: Heizstrahler
- 40 -: Überziehraum
- 41 -: Seitenwandung
- 42 -: Wasserlinie
- 43 -: Ultraschall-Sonotroden

## Patentansprüche

1. Verfahren zum Reinigen einer Überziehmaschine (1) zur Verarbeitung von Schokolade und ähnlichen Massen mit Wasser, wobei die Überziehmaschine mit einem Rahmen (2) und einem darin gelagerten, umlaufend angetriebenen Gitterband (8) zur Aufnahme der zu überziehenden Artikel, das über Umlenkungen (13) geführt ist, und mit oberhalb einer Wanne (6) mit einem insbesondere beheizbarem Doppelmantel (7) vorgesehenen Aggregaten ausgestattet ist, **dadurch gekennzeichnet, daß** die Wanne (6) der Überziehmaschine (1) mit vorzugsweise heißem Wasser gefüllt wird, dessen Temperatur oberhalb der Schmelztemperatur der Masse liegt, und daß das eingefüllte Wasser durch eine oder mehrere Förderpumpen (34, 38, 14) in weitgehend druckloser Zirkulation über die zu reinigenden Aggregate und das Gitterband geleitet wird.

2. Verfahren nach Anspruch 1, **dadurch gekennzeichnet, daß** die Wanne (6) der Überziehmaschine (1) mit dem Wasser soweit gefüllt wird, daß auch das obere Trum (9) des Gitterbandes (8) unterhalb der Wasserlinie (42) liegt.

3. Verfahren nach Anspruch 1, **dadurch gekennzeichnet, daß** das eingefüllte Wasser vermittels eines oder mehrerer Schläuche (36) in weitgehend druckloser Zirkulation über die zu reinigenden Aggregate und das Gitterband (8) geleitet wird, während die wesentlichen zu reinigenden Aggregate und das Gitterband (8) der Überziehmaschine (1) angetrieben werden.

4. Verfahren nach einem der Ansprüche 1 bis 3, **dadurch gekennzeichnet, daß** der Doppelmantel (7) der Wanne (6) so hoch aufgeheizt wird, daß das Wasser eine Temperatur erhält bzw. behält, die oberhalb der Schmelztemperatur der Masse liegt.

5. Verfahren nach einem der Ansprüche 1 bis 4, **dadurch gekennzeichnet, daß** dem Wasser ein Lösungsmittel, insbesondere ein Fettlöser, hinzugefügt wird.

6. Verfahren nach einem der Ansprüche 1 bis 5, **dadurch gekennzeichnet, daß** das Wasser während des Wasch- und Spülvorgangs zusätzlich durch Einleitung von Ultraschallschwingungen angeregt wird.

7. Verfahren nach einem der Ansprüche 1 bis 6, **dadurch gekennzeichnet, daß** im Anschluß an den Wasch- und Spülvorgang mit dem heißem Wasser eine Aufheizung der wesentlichen zu reinigenden Aggregate der Überziehmaschine (1) mit Heißwasser von etwa 65 bis 80 °C erfolgt, so daß nach der Abfuhr des Heißwassers die wesentlichen zu reinigenden Aggregate durch eine Verdampfungsreaktion abtrocknen.

8. Verfahren nach Anspruch 3, **dadurch gekennzeichnet, daß** das zu einem Schleierkasten (18) führende Verteilerrohr (17) durch einen in den Tunkkasten (22) der Bodenüberziehstation (21) gerichteten Rohrbogen (37) ersetzt wird, und daß während des Antriebes des Gitterbandes (8) auch die Schleierpumpe (14) eingeschaltet wird.

9. Verfahren nach einem der Ansprüche 1 bis 8, **dadurch gekennzeichnet, daß** im Anschluß an den Wasch- und Spülvorgang eine Trocknung durchgeführt wird, indem bei weiterhin beheiztem Doppelmantel (7) ein Gebläse (27) der Überziehmaschine (1) dazu benutzt wird, um Luft auf die Aggregate und durch das Gitterband (8) zu blasen.

10. Mit Wasser reinigbare Überziehmaschine zur Verarbeitung von Schokolade und ähnlichen Massen, mit einem Rahmen (2) und einem darin gelagerten, umlaufend angetriebenen Gitterband (8) zur Aufnahme der zu überziehenden Artikel, das über Umlenkungen (13) geführt ist, und mit oberhalb einer Wanne (6) vorgesehenen Aggregaten, insbesondere einer Bodenüberziehstation (21) mit Tunkkasten und einer Rüttelvorrichtung (24) unter dem oberen Trum (9) des Gitterbandes (8), und einem Schleierkasten und einem Gebläse über dem oberen Trum (9) des Gitterbandes (8), **dadurch gekennzeichnet, daß** die Wanne (6) der Überziehmaschine (1) eine umlaufende Seitenwandung (41) aufweist, die bis über das obere Trum (9) des Gitterbandes (8) hochgezogen ausgebildet ist.

11. Überziehmaschine nach Anspruch 10, **dadurch gekennzeichnet, daß** die Wanne (6) der Überziehmaschine (1) einen Niveaufühler (30) für das Einfüllen des vorzugsweise heißen Wassers aufweist, der oberhalb des oberen Trums (9) des Gitterbandes (8) angeordnet ist.

12. Überziehmaschine nach einem der Ansprüche 10 oder 11, **dadurch gekennzeichnet, daß** in der Wanne (6) der Überziehmaschine (1) eine oder mehrere Ultraschallsonden (43) unterhalb der maximalen Wasserlinie (42) angeordnet oder einsetzbar sind.

13. Überziehmaschine nach einem der Ansprüche 10 oder 11, **dadurch gekennzeichnet, daß** eine gesonderte Wasserpumpe (38) für die Umwälzung des heißen Wassers und des Heißwassers vorgesehen ist.

## Claims

1. Method of cleaning a coating machine (1) for coating articles with chocolate masses and the like with hot water, the coating machine having a frame (2) and a grating conveyer belt (8) for receiving the articles to be coated, the grating conveyer belt being arranged within the frame, being rotatingly driven and being guided by deflecting elements (13), and aggregates being arranged above a tub (6), the tub including a double housing (7) preferably being heatable, **characterized in that** the tub (6) of the coating machine (1) is filled with preferably hot water, the water having a temperature being higher than the melting temperature of the mass, and **in that** the filled water is directed in a substantially unpressurized circulation over the aggregates to be cleaned and the grating conveyer belt by one or more pumps (34, 38, 14).

2. Method of claim 1, **characterized in that** the tub (6) of the coating machine (1) is filled with the water up to a water level such that the upper portion (9) of the grating conveyer belt (8) is below the water level (42).

3. Method of claim 1, **characterized in that** the filled water is directed in a substantially unpressurized circulation over the aggregates to be cleaned and the grating conveyer belt (8) by one or more hoses (36) while the important aggregates to be cleaned and the grating conveyer belt (8) of the coating machine (1) are driven.

4. Method of one of the claims 1 to 3, **characterized in that** the double housing (7) of the tub (6) is heated up to a temperature such that the water has or keeps respectively a temperature which is higher than the melting temperature of the mass.

5. Method of one of the claims 1 to 4, **characterized in that** a solvent, especially a fat solvent, is added to the water.

6. Method of one of the claims 1 to 5, **characterized in that** the water during the washing and circulation action is excited by introducing ultrasonic waves into the water.

7. Method of one of the claims 1 to 6, **characterized in that** after the washing and circulation action using the hot water the important aggregates to be cleaned of the coating machine (1) are heated up using hot water having a temperature of about 65 °C to 80 °C so that after removal of the hot water the important aggregates get dry by an evaporation action.

8. Method of claim 3, **characterized in that** the conduit (17) of a curtain station (18) is replaced by a pipe bend (37) being directed on the base case (22) of the base station (21), and **in that** during the drive of the grating conveyer belt (8) the curtain pump (14) is driven also.

9. Method of one of the claims 1 to 8, **characterized in that** after the washing and circulation action a drying action is conducted by using a fan (27) of the coating machine (1) to direct air to the aggregates and through the grating conveyer belt (8) while the double housing (7) is heated.

10. With water cleanable coating machine for coating articles with chocolate masses and the like, having a frame (2) and a grating conveyer belt (8) for receiving the articles to be coated, the grating conveyer belt being arranged within the frame, being rotatingly driven and being guided by deflecting elements (13) and aggregates being arranged above a tub (6), especially a base station (21) with a base case and a vibration apparatus (24) below the upper portion (9) of the grating conveyer belt (8) and a curtain station and a fan above the upper portion (9) of the grating conveyer belt (8), **characterized in that** the tub (6) includes a side wall (41) extending beyond the upper portion (9) of the grating conveyer belt (8).

11. Coating machine of claim 10, **characterized in that** the tub (6) of the coating machine (1) includes a level sensor (30) for the hot water to be filled in the tub, the sensor being arranged above the upper portion (9) of the grating conveyer belt (8).

12. Coating machine of one of the claims 10 or 11, **characterized in that** one or more ultrasonic transmitters (43) are arranged below the maximum water level (42) in the tub (6) of the coating machine (1).

13. Coating machine of one of the claims 10 or 11, **characterized in that** a separate pump (38) is provided to pump the hot water to circulate in the machine.

## Revendications

1. Procédé de nettoyage à l'eau d'une machine à recouvrir (1) pour le traitement de chocolat et de pâtes similaires, la machine à recouvrir étant équipée d'un cadre (2) et d'une bande de grille (8) montée à l'intérieur, entraînée en rotation, destinée à recevoir les articles à recouvrir, laquelle est guidée par des renvois (13), et comportant des groupes prévus au-dessus d'un bac (6) avec une double enveloppe (7) pouvant en particulier être chauffée, **caractérisé en ce que** le bac (6) de la machine à recouvrir (1) est rempli de préférence d'eau chaude dont la température se situe au-dessus de la température de fusion de la pâte, et **en ce que** l'eau introduite est guidée en circulation, pratiquement sans pression, par une ou plusieurs pompes de circulation (34, 38, 14), à travers les groupes à nettoyer et la bande de grille.

2. Procédé selon la revendication 1, **caractérisé en ce que** le bac (6) de la machine à recouvrir (1) est rempli avec l'eau jusqu'à ce que le brin supérieur (9) de la bande de grille (8) se situe au-dessous du niveau de l'eau (42).

3. Procédé selon la revendication 1, **caractérisé en ce que** l'eau introduite est guidée en circulation, pratiquement sans pression, au moyen d'un ou plusieurs tuyaux (36), à travers les groupes à nettoyer et la bande de grille (8), pendant que les groupes à nettoyer essentiels et la bande de grille (8) de la machine à recouvrir (1) sont entraînés.

4. Procédé selon l'une des revendications 1 à 3, **caractérisé en ce que** la double enveloppe (7) du bac (6) est chauffée jusqu'à ce que l'eau atteigne ou maintienne une température qui est supérieure à la température de fusion de la pâte.

5. Procédé selon l'une des revendications 1 à 4, **caractérisé en ce qu'**on ajoute à l'eau un solvant, en particulier un solvant des graisses.

6. Procédé selon l'une des revendications 1 à 5, **caractérisé en ce que** pendant le processus de lavage et de rinçage, l'eau est en outre mise en mouvement par introduction d'ultrasons.

7. Procédé selon l'une des revendications 1 à 6, **caractérisé en ce qu'**à la suite du processus de lavage et de rinçage avec l'eau chaude, il se produit un chauffage des principaux groupes à nettoyer de la machine à recouvrir (1) avec de l'eau très chaude à environ 65 à 80°C, de sorte qu'après évacuation de l'eau très chaude les principaux groupes à nettoyer sèchent par une réaction d'évaporation.

8. Procédé selon la revendication 3, **caractérisé en ce que** le tube de distribution (17) menant à un caisson à nébuliser (18) est remplacé par un coude tubulaire (37) dirigé dans le caisson à tremper (22) du poste de recouvrement du fond (21), et **en ce que** pendant l'entraînement de la bande de grille (8) la pompe à nébuliser (14) est également mise en service.

9. Procédé selon l'une des revendications 1 à 8, **caractérisé en ce qu'**à la suite du processus de lavage et de rinçage il est procédé, pendant que la double enveloppe (7) continue d'être chauffée, à un séchage par utilisation d'une soufflante (27) de la machine à recouvrir (1), pour souffler de l'air sur les groupes et à travers la bande de grille (8).

10. Machine à recouvrir pouvant être nettoyée à l'eau pour le traitement de chocolat et de pâtes similaires, comportant un cadre (2) et une bande de grille (8) montée à l'intérieur, entraînée en rotation, destinée à recevoir les articles à recouvrir, laquelle est guidée sur des renvois (13), et comportant des groupes prévus au-dessus d'un bac (6), en particulier un poste de recouvrement du fond (21) avec caisson à tremper et un dispositif de vibrations (24) au-dessous du brin supérieur (9) de la bande de grille (8), et comportant un caisson à nébuliser et une soufflante au-dessus du brin supérieur (9) de la bande de grille (8), **caractérisée en ce que** le bac (6) de la machine à recouvrir (1) présente une paroi latérale (41) périphérique qui est relevée jusqu'au-dessus du brin supérieur (9) de la bande de grille (8).

11. Machine à recouvrir selon la revendication 10, **caractérisée en ce que** le bac (6) de la machine à recouvrir (1) comporte un capteur de niveau (30) pour introduire l'eau de préférence chaude, lequel est disposé au-dessus du brin supérieur (9) de la bande de grille (8).

12. Machine à recouvrir selon l'une des revendications 10 ou 11, **caractérisée en ce que** dans le bac (6) de la machine à recouvrir (1) une ou plusieurs sondes à ultrasons (43) sont disposées ou peuvent être insérées au-dessous de la ligne de niveau maximal (42) de l'eau.

13. Machine à recouvrir selon l'une des revendications 10 ou 11, **caractérisée en ce qu'**il est prévu une pompe à eau (38) séparée pour la circulation de l'eau chaude et de l'eau très chaude.
